# FASCICULE DE BREVET EUROPEEN

(11) **EP 1 441 895 B1**
(45) Date de publication et mention de la délivrance du brevet: **05.09.2007**
(21) Numéro de dépôt: 02795301.7
(22) Date de dépôt: 11.10.2002
(51) Int. Cl.: B29C 49/06, B29K 67/00

(54) **PROCEDE DE FABRICATION DE CORPS CREUX, CORPS CREUX, PREFORMES ET BOUTEILLES OBTENUS PAR CE PROCEDE**
VERFAHREN ZUR HERSTELLUNG VON HOHLKÖRPERN, VORFORMLINGE DAFÜR UND NACH DIESEM VERFAHREN HERGSTELLTE FLASCHEN
METHOD FOR MAKING HOLLOW BODIES, PREFORMS AND BOTTLES OBTAINED BY SAID METHOD

(30) Priorité: 12.10.2001 FR 0113145
(43) Date de publication de la demande: 04.08.2004
(73) Titulaire: Tergal Fibres, 02430 Gauchy (FR)
(72) Inventeur: LEPAGE, Jean-Luc, F-69340 Francheville (FR); ROBERT, Gilles, F-69540 Irigny (FR); BECKERICH, Pascal, F-67700 Gottenhouse (FR); PEREZ, Gérard, F-69110 Sainte-Foy-Les-Lyon (FR); DARRAS, David, F-76610 Le Havre (FR); LETERC, François, F-76700 Harfleur (FR)
(74) Mandataire: Esson, Jean-Pierre
(86) Numéro de dépôt international: PCT/FR2002/003465
(87) Numéro de publication internationale: WO 2003/031156

(56) Documents cités:
- EP-A- 0 422 282
- EP-A- 0 525 463
- EP-A- 0 693 356
- DE-A- 4 223 007
- GB-A- 1 371 505
- US-A- 4 080 317
- US-A- 4 340 721
- US-A- 5 292 865
- US-A- 5 302 686
- US-A- 5 656 719
- DATABASE WPI Section Ch, Week 199744 Derwent Publications Ltd., London, GB; Class A23, AN 1997-475502 XP002191637 & JP 09 221540 A (MITSUBISHI CHEM CORP), 26 août 1997 (1997-08-26)
- PATENT ABSTRACTS OF JAPAN vol. 018, no. 182 (C-1184), 29 mars 1994 (1994-03-29) & JP 05 339350 A (MITSUBISHI KASEI CORP), 21 décembre 1993 (1993-12-21)

## Description

La présente invention concerne la fabrication de corps creux par injection/soufflage de polyester, plus particulièrement les corps creux utilisés pour l'emballage de denrées alimentaires liquides telles que des boissons gazeuses, eaux minérales ou naturelles.

Plus précisément, l'invention concerne la fabrication de corps creux présentant des propriétés thermo-mécaniques élevées tels que des bouteilles aptes à subir, sans déformation notable, des contraintes thermiques relativement sévères rencontrées au cours de processus tels que leur remplissage par un liquide chaud ou la pasteurisation de leur contenu.

Depuis quelques dizaines d'années, le polyester, plus particulièrement le PolyEthylène Téréphtalate, plus connu sous l'abréviation PET, trouve une application de plus en plus importante dans le domaine de la fabrication de récipients, et plus spécialement de bouteilles pour boissons de toutes natures.

Classiquement, les récipients (bouteilles) plastiques en polyester(PET) sont fabriqués selon des techniques de moulage par injection/soufflage de polyester fondu. En pratique, cette fabrication comporte le plus souvent une première étape de fabrication d'une préforme ayant la forme générale d'un tube cylindrique creux, fermé à l'une de ses extrémités et dont l'autre extrémité ouverte a la forme du col de la bouteille qui sera obtenue dans une deuxième étape de soufflage à chaud dans un moule ayant la forme finale du récipient (bouteille).

Le polyester (PET) de départ est sous forme de granulés que l'on fait fondre avant l'étape d'injection.

Parmi les contraintes imposées au polyester (PET) dans leur utilisation comme matière première de fabrication de récipients, en particulier de bouteilles, la transparence est l'une des plus importantes. En effet, après fusion et mise en forme, le PET durcit en refroidissant, avec une certaine tendance à cristalliser sous forme sphérolitique, qui peut rendre la paroi de la préforme opaque.

Pour pallier cet inconvénient, on met en oeuvre, en plus des monomères constitutifs essentiels du polyester (l'acide téréphtalique et l'éthylène glycol dans le cas du PET), d'autres monomères qui agissent comme retardateurs de cristallisation et qui sont présents dans le polyester à des concentrations variables, par exemple comprises entre 3,5 et 7,5 % molaire par rapport à la totalité des monomères diacides.

Il a également été proposé des polyesters contenant moins de 3% en moles de monomères différents des monomères ethylène glycol et acide téréphtalique et avec une concentration en diéthylène glycol comprise entre 1 et 2.5% en moles. Ces polymères présentent des indices de viscosité intrinsèque compris entre 0.5 et 0.7 dl/g et sont convenables pour la fabrication de bouteilles par injection-soufflage. De tels sont notamment décrits dans les brevets DE4223007 et US5302688. Le brevet US-A-5302688 décrit un procédé de fabrication d'un récipient creux par un procédé d'injection/soufflage d'un polyester à base d'unités récurrentes de téréphtalate d'éthylène glycol, comprenant une première étape d'injection d'une préforme et une seconde étape de soufflage de ladite préforme dans un moule de forme correspondante au récipient dans lequel le polyester comprend une quantité de monomères différents de l'éthylène glycol et de l'acide téréphtalique au plus égale à 3,5 % molaire par rapport au nombre total de moles de monomères diacides et une quantité de diéthylène glycol libre ou combiné représente au maximum 2,5 % molaire par rapport au nombre de moles de monomères diacides.

Le brevet EP0693356 décrit un polyester contenat de 1 à 6% d'acide isophtalique et une viscosité intrinsèque comprise entre 0.8 et 0.85 dl/g. Ce polymère est convenanble pour la fabrication de bouteilles par injection-soufflage qui sont remplissables après une première utilisation.

Il a également été proposé des polyesters présentant une viscosité intrinsèque supérieure à 1, par exemple 1.16 dl/g qui peuvent être utilisé dans les procdés d'injection/soufflage. Toutefois, l'augmentation de viscosité est obtenue par la formation de réticulation par utilisation de monomères tétrafonctionnels,

Certains liquides alimentaires conditionés dans les bouteilles en polyester (PET) doivent être pasteurisés, c'est-à-dire chauffés pendant 20 à 30 minutes à 65-75°C ou plus. Ces bouteilles sont également utilisées dans des procédés de remplissage avec des denrées chaudes, appelés communément procédés à remplissage à chaud. Les bouteilles en polyester (PET) doivent donc supporter des contraintes thermiques. Or, la température de transition vitreuse des polyesters, et en particulier du PET, est de l'ordre de 75-80°C.

En conséquence, les procédés décrits ci-dessus qui comprennent une étape à température élevée entraînent des déformations qui sont en partie irréversibles et permanentes. On utilise le terme fluage pour désigner ces déformations irréversibles.

Ce problème technique de limitation du fluage à chaud des polyesters (PET) utilisés comme matériaux constitutifs de récipients (bouteilles) se pose d'autant plus quand le liquide à conditionner est constitué par une boisson gazeuse. En effet, le gaz contenu dans la boisson augmente la contrainte mécanique appliquée sur les parois des récipients amplifiant ce phénomène.

Pour tenter de remédier à cela, il a été proposé d'intervenir sur le procédé de d'obtention des corps creux et/ou sur le polyester mis en oeuvre.

La demande de brevet français n°2 658 119 procède de la première possibilité. Elle décrit un procédé et une installation pour fabriquer des récipients tels que des bouteilles en PET, résistant à des conditions thermiques relativement sévères au cours de leurs utilisations. Ce procédé consiste à souffler le corps (à l'exclusion du col) d'une préforme en PET amorphe chauffé à une température supérieure à la température de ramollissement du PET, dans un moule refroidi (5 à 40°C) pour former un récipient intermédiaire de plus grand volume que le récipient à obtenir, puis à chauffer le corps de ce récipient intermédiaire à 160-240°C pendant une à cinq minutes, en même temps que le goulot soit chauffé puis appliquer un refroidissement contrôlé, pour obtenir un récipient intermédiaire à corps rétréci et goulot cristallisé. Le produit est soufflé une seconde fois à ses dimensions définitives, pendant 2 à 6 secondes pour obtenir un récipient définitif présentant une tenue thermo-mécanique améliorée.

Ce procédé connu a l'inconvénient d'être relativement lourd et long à mettre oeuvre, et la tenue thermo-mécanique est insuffisante dans la plupart des procédés de pasteurisation.

Par ailleurs, sont apparus sur le marché des polyesters (PET) présentés comme ayant une bonne résistance à la déformation à chaud et éventuellement sous pression.

Ces polyesters ont été commercialisés, par exemple, par la société KOSA sous la dénomination commerciale "Polyclear 2201" ou la société SHELL CHEMICALS sous la dénomination commerciale "CLEARTUF P85HF". Toutefois, le niveau de tenue thermo-mécanique du polyester, évalué par la détermination de la VRB définie ci-dessous, nécessite de fabriquer des corps creux ou bouteilles présentant une épaisseur importante de paroi et une forme particulière pour permettre leur utilisation notamment dans les procédés de pasteurisation.

Pour évaluer la résistance à la déformation ou au fluage des corps creux obtenus avec un polyester donné, dans l'application de la présente invention, on met en oeuvre un test de mesure du fluage (déformation) sur bouteilles de formes et de dimensions déterminées. Ce test dénommé Test de pasteurisation (Tp)se définit comme suit :

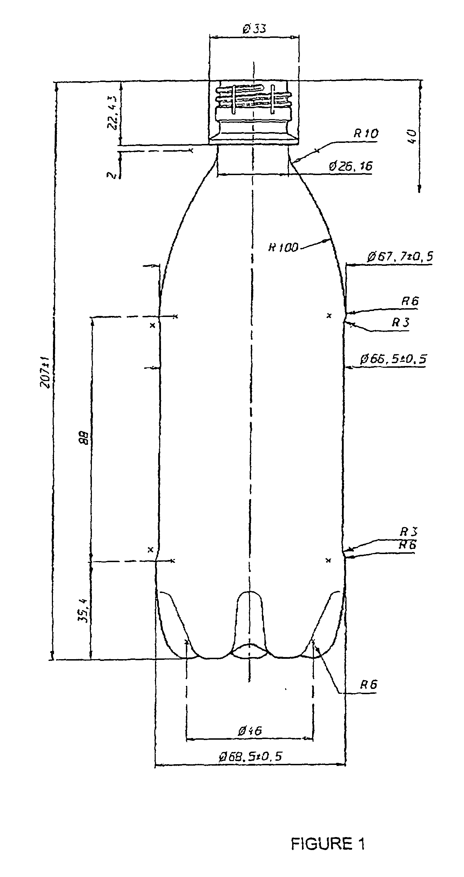

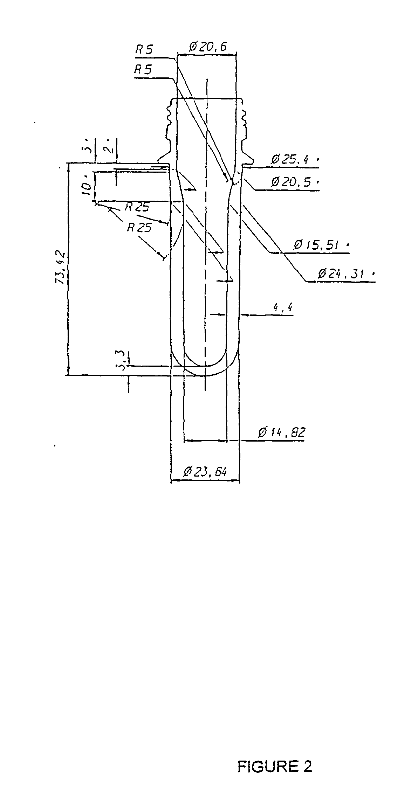

La bouteille de référence est celle représentée sur la figure 1 annexée. Le moule utilisé comprend donc l'empreinte de cette bouteille de référence de la figure 1. Le polyester (PET) que l'on cherche à caractériser se présente sous la forme de granulés et l'on fabrique la bouteille-test par un procédé classique d'injection/soufflage. Dans une première étape une préforme tubulaire dont la forme et les dimensions sont données sur la figure 2 annexée est fabriquée par injection puis dans une seconde étape cette préforme est soufflée dans un moule pour obtenir une bouteille de forme et dimensions illustrées par la figure 1. Les conditions d'injection et de soufflage sont déterminées en fonction des caractéristiques du polyester utilisé par application des connaissances et de la pratique de l'homme du métier de la fabrication des corps creux. L'injection est réalisée sur une presse BILLION H650/200 Probilog 3S équipée d'un moule à une empreinte. Le soufflage est réalisé dans un moule à une température de 10°C avec une machine de soufflage commercialisée par la société SIDEL sous la dénomination SB08 série 2 type HPR.

Le test de pasteurisation Tp proprement dit consiste à remplir à un niveau donné, la bouteille de référence ainsi fabriquée, avec de l'eau carbonatée à 2,7 vol. CO₂. La bouteille remplie est totalement immergée dans un bain d'eau thermostaté à 75 °C pendant 10min. La bouteille est ensuite plongée dans un bain d'eau thermostaté à 60°C pendant 20 min. Elle est ensuite refroidie au moyen d'une douche à l'eau à une température de l'ordre de 20°C (eau à température ambiante).

Toutes les dimensions de la bouteille sont mesurées avant et après le test pour établir les pourcentages de variation : hauteur, diamètre épaule, diamètre corps, diamètre fond, profondeur fond. On détermine également la variation de volume de la bouteille par mesure du volume du récipient avant et après le test de pasteurisation. Cette mesure est réalisée par pesée de la quantité d'eau nécessaire pour remplir à ras bord ledit récipient.

Le coefficient VRB représente la différence de volume exprimée en pourcentage par rapport au volume initial de la bouteille.

Selon ce test Tp, les bouteilles en polyester standard ont un VRB compris entre 5 et 10%, correspondant à un fluage rédhibitoire. Un niveau de VRB de l'ordre de 2,0 à 2,5 % est atteint avec certains polyesters, notamment les polyesters commerciaux cités précédemment.

Toutefois, un tel niveau peut s'avérer encore non satisfaisant notamment pour des applications dans le domaine des boissons gazeuses ou fortement gazeuses.

Un des buts essentiels de l'invention est de proposer des récipients en polyester présentant des propriétés thermo-mécaniques élevées obtenus par un procédé classique de fabrication par injection/soufflage.

A cet effet, l'invention propose un procédé de fabrication d'un récipient creux par un procédé d'injection/soufflage selon la revendication 1, un corps creux selon la revendication 8 et une préforme selon la revendication 10.

La quantité de diéthylène glycol libre ou combiné représente au maximum 2,5 % molaire par rapport au nombre de moles de monomères diacides.

De préférence, la quantité de monomères différents de l'ethylène glycol et de l'acide téréphtalique est inférieure à 3 % molaire, avantageusement inférieure à 2,5 % molaire. De même, la quantité en diéthylène glycol est de préférence inférieure à 2 % molaire, avantageusement inférieure à 1,5 % molaire.

L'unité récurrente de téréphtalate d'éthylène glycol est obtenue par réaction entre un monomère A (l'éthylène glycol) et un monomère B (l'acide téréphtalique ou un ester dudit acide tel que le diméthyl téréphtalate).

Un autre objet de l'invention réside dans des corps creux ou récipients tels que bouteilles, flacons, bonbonnes obtenus par le procédé décrit ci-dessus et présentant une résistance au fluage à chaud illustrée par une VRB inférieure ou égale à 2 % permettant l'utilisation de ces corps creux pour l'emballage et la conservation de produits liquides notamment de denrées alimentaires comme l'eau, des sodas, des boissons gazeuses, la bière plus particulièrement des denrées alimentaires nécessitant une étape de pasteurisation.

L'indice de viscosité IV est mesuré sur une solution de polymère à 0,5 g de polymère / 100 ml d'un solvant constitué d'orthodichlorobenzène et de phénol (50/50 en poids) à 25°C, selon la norme ISO 1628/5 du 15106/1986.

L'indice de viscosité IV considéré est mesuré sur le polyester constituant les parois des corps creux ou bouteille. Pour effectuer cette mesure, un morceau de la bouteille est découpé puis coupé en petits morceaux pour permettre leur solubilisation.

Généralement, l'indice de viscosité du polyester est peu affecté au cours du procédé de fabrication du corps creux. Toutefois, l'indice de viscosité mesuré à partir de la paroi de la bouteille peut être inférieur ou supérieur à celui mesuré à partir des granulés alimentés dans l'étape d'injection. L'écart entre ces deux valeurs est généralement inférieur à 10 % de l'indice de viscosité déterminé à partir de la bouteille.

Ces considérations sont également applicables pour l'indice de viscosité mesuré à partir du polyester formant les parois de la préforme obtenue après l'étape d'injection.

Selon une caractéristique de l'invention, les monomères de départ différents des monomères -A- et -B- ont avantageusement pour effet de retarder la cristallisation permettant, notamment au cours du refroidissement de l'article injecté et moulé (par exemple la préforme), de ralentir ou retarder la cristallisation du polyester pour obtenir ainsi une cristallisation en objet cristallin de taille très petite, et ce faisant éviter la diffusion de la lumière visible, condition essentielle pour obtenir un article transparent, dont les parois ne présentent pas de voile ou "haze", avec des propriétés mécaniques acceptables.

Ces agents retardateurs de cristallisation sont des composés di-fonctionnels tels que des diacides et/ou diols ajoutés au mélange de monomères -A-, -B- avant ou au cours de la polymérisation du polyester.

Comme monomères retardateurs de cristallisation, on peut citer à titre d'exemples de diacides, l'acide isophtalique, l'acide naphtalènedicarboxylique, l'acide cyclohexane dicarboxylique, l'acide cyclohexane diacétique, l'acide succinique, l'acide glutarique, l'acide adipique, l'acide azélaïque, l'acide sébacique. A titre d'exemples de diols, on peut citer les diols aliphatiques comprenant de 3 à 20 atomes de carbone, les diols cycloaliphatiques de 6 à 20 atomes de carbones, les diols aromatiques comprenant de 6 à 14 atomes de carbone et leurs mélanges comme le diéthylène glycol, le triéthylène glycol, les isomères du 1,4-cyclohexane diméthanol, le 1-3 propanediol, le 1,4-butanediol, le 1,5-pentanediol, le (2,4)-3 méthylpentanediol, 1-4, 2-méthyipentanediol,(1,3)-2,2,4-triméthylpentanediol, (1,3),2-éthylhexanediol, (1-3)-2,2-diéthylpropanediol, 1,3-hexanediol, 1,4-di(hydroxyéthoxy) benzène, 2,2-bis (4-hydroxycyclohexyl)propane, 2,4-4 dihydroxy-1,1,3,3-tétraméthylcyclobutane, 2,2-bis(3-hydroxyéthoxyphényl)propane, 2,2-bis(4-hydroxypropoxyphényl)propane et leurs mélanges.

S'agissant des monomères retardateurs de cristallisation non présents au départ de la polymérisation mais générés par cette dernière, l'exemple le plus typique est celui du diéthylène glycol présent de manière inhérente dans les polyesters car il se forme pendant la synthèse par condensation sur elle-même de deux molécules d'éthylène-glycol. Le diéthylène glycol peut se trouver sous forme libre ou sous forme combinée avec la chaîne macromoléculaire de polyester.

Les procédés de préparation des polyesters consistent en une condensation à haute température soit du produit d'estérification d'un diacide carboxylique par un diol, soit du produit de transestérification d'un diester par un diol. Cette condensation est réalisée à l'état fondu. Pour l'obtention du polyéthylène téréphtalate (PET), on condense le produit de la transestérification du diméthyl téréphtalate (DMT) par l'éthylène glycol (EG) ou le produit de l'estérification de l'acide téréphtalique purifié (PTA) par l'éthylène glycol.

Concernant la voie dite "téréphtalate de diméthyle" (DMT). Il s'agit d'une réaction de transestérification. Le DMT fondu est solubilisé dans l'éthylène glycol (EG) présent en excès, le rapport molaire EG/DMT étant d'environ 1.9 à 2.2, et la réaction est menée à pression atmosphérique à des températures d'environ 130°C à 250°C. Elle nécessite la présence d'un catalyseur comme l'acétate de manganèse. Le méthanol dégagé par la réaction est éliminé par distillation. L'éthylène glycol présent en excès est éliminé par évaporation après la réaction de transestérification. Le catalyseur de transestérification qui est aussi un catalyseur de la dégradation du polyester est bloqué à l'aide de composés phosphorés après la réaction. Le produit résultant de la transestérification est un mélange de bis-hydroxyéthyl-téréphtalate (BHET) et d'oligomères.

L'autre voie dite "estérification directe" ou "PTA", comprend une réaction d'estérification de l'acide téréphtalique par l'éthylène glycol. Elle est effectuée à des températures de 130°C à 280°C. L'éthylène glycol est présent avec un rapport molaire EG/Acide Téréphtalique d'environ 1 à 3. Il résulte de cette réaction un mélange d'oligomères ayant des fonctions de terminaison sous forme d'acide téréphtalique ou de téréphtalate d'hydroxyéthyle.

L'utilisation de ces procédés fait l'objet de nombreuses études décrites dans la littérature. Les conditions indiquées ci-dessus ne constituent pas une limitation à la portée de la présente invention.

Les étapes de polycondensation et éventuellement de polymérisation en phase solide sont des étapes de polymérisation par condensation. Elles sont généralement catalysées à l'aide de composés métalliques, par exemple par des composés de l'antimoine, du titane ou du germanium. Elles peuvent être catalysées par tout catalyseur de polycondensation décrit dans l'art antérieur.

Les polyesters obtenus ont de préférence une faible quantité d'agents de germination pour éviter une cristallisation sphérolitique au cours de la fabrication des préformes. Cette caractéristique peut être obtenue par traitement des polyesters pour éliminer ces agents, par exemple, par filtration ou en réalisant la fabrication du polyester avec des conditions d'estérification et de polycondensation adaptées (température, pression, concentration en catalyseur).

De manière générale, les procédés de préparation de polyester d'indice de viscosité élevé, notamment supérieur à 0,95 dl/g comprennent une étape de postcondensation, de préférence en phase solide réalisée préférentiellement sous gaz inerte ou sous des conditions non oxydantes à des températures comprises entre 190°C et 230°C, environ.

Toutefois, d'autres procédés permettant d'obtenir des polyesters à IV élevés peuvent être mis en oeuvre comme ceux décrits dans la demande de brevet WO 00/32676, utilisant un procédé de postcondensation en milieu dispersé à partir d'un prépolymère de faible degré de polymérisation ou une postcondensation en milieu fondu dans un réacteur approprié décrit par exemple dans une communication faite à ANTEC'95 parue dans le compte-rendu de cette réunion aux pages 250-258.

Les conditions d'obtention du polyester sont choisies, de manière connue en soi, pour obtenir un polyester présentant une teneur en diéthylène glycol la plus faible possible.

Les granulés de polyester ainsi obtenus sont ensuite alimentés dans des procédés classiques de moulage par injection pour la fabrication de préformes présentant une forme et des dimensions déterminées en fonction du corps creux à fabriquer dans l'étape suivante de soufflage. De telles préformes sont également un objet de la présente invention.

Cette dernière étape de soufflage peut être intégrée à l'étape d'injection, les préformes ne subissant pas de réchauffement ou séparée avec une étape de préchauffage des préformes à une température supérieure à la Tg du polymère. Ces procédés sont décrits très largement dans la littérature et utilisés à grande échelle dans l'industrie.

Outre les spécifications de fluage réduit et de transparence, les polyesters (PET) peuvent avantageusement avoir une teneur réduite en acétaldéhyde dans les parois du récipient dont ils forment le matériau constitutif. En effet, l'acétaldéhyde est un produit résultant de la dégradation du polyester qui peut altérer le goût des denrées contenues dans les récipients ou corps creux. Cet acétaldéhyde se forme à température élevée au cours de la fabrication du polyester et du procédé de fabrication des récipients (bouteilles), notamment pendant l'étape d'injection des préformes.

Pour certaines applications, le polyester utilisé pour la mise en oeuvre du procédé de l'invention présentera une teneur en acétaldéhyde suffisamment faible pour obtenir une concentration en acétaldéhyde dans les parois du récipient fini inférieure ou égale à 6 ppm. Pour d'autres applications, cette caractéristique n'est pas nécessaire.

Les corps creux ainsi produits avec le polyester décrit ci-dessus présente des propriétés de résistance au fluage remarquables notamment à température élevée, c'est à dire à des températures supérieures à 60°C environ. Ces propriétés remarquables de résistance au fluage permettent également de diminuer la déformation des bouteilles ou récipients pendant leur stockage à des températures plus ou moins élevées, notamment dans les pays à climat chaudavec des températures ambiantes généralement supérieures à 30°C. En effet, le stockage de ces récipients est souvent réalisé par gerbage. Par ailleurs, les autres propriétés du polymère et notamment sa transparence ne sont pas affectées.

Ainsi, la résistance au fluage des corps creux et plus précisément des bouteilles obtenues par le procédé de l'invention est illustrée par un test qui permet de mesurer la déformation d'une bouteille pleine d'un liquide (eau carbonatée) à une température déterminée. Ce test décrit ci-dessus consiste à mesurer et calculer la variation de volume de la bouteille quand elle est portée à une certaine température. Cette variation est appelée variation du "volume ras bord" ou VRB et s'exprime en pourcentage de variation par rapport au volume initial.

Les corps creux ou bouteilles obtenus par le procédé de l'invention présente un VRB inférieur à 2 %, de préférence inférieur à 1,8 %. Une telle résistance au fluage permet d'utiliser ces récipients ou bouteilles pour l'emballage de denrées alimentaires même fortement gazeuses nécessitant une étape de pasteurisation de la bouteille assurant la conservation de la denrée pendant une durée suffisante avant sa consommation.

Le procédé de fabrication de l'invention peut être également illustré par le test de soufflage libre des préformes qui consiste à chauffer la préforme de la figure 2 par immersion dans un bain d'huile à 120°C pendant 4 minutes, puis soufflage libre de la préforme immédiatement après la sortie du bain d'huile pour éviter son refroidissement, sous une pression de 4 bars. Le volume de la bouteille soufflée est mesuré par détermination du poids d'eau nécessaire à son remplissage à ras bord.

Les préformes obtenues selon l'invention présentent au test de soufflage, un volume très inférieur à celui obtenu avec les préformes produites avec les polyesters utilisés actuellement.

Comme denrées alimentaires susceptibles d'être emballées dans les bouteilles de l'invention, on peut citer, à titre d'exemple non limitatif, les boissons gazeuses ou non sucrées ou non communément appelées "Soda", la bière, le lait, l'huile, et les eaux naturelles, de source, gazeuses ou non.

D'autres avantages et détails de l'invention apparaîtront au vu des exemples donnés ci-dessous uniquement à titre indicatif et des figures en annexe, dans lesquelles,
- la figure 1 représente une vue en coupe longitudinale de la bouteille de référence pour la mise en oeuvre du test de détermination de la VRB, et
- la figure 2 représente une vue en coupe longitudinale de la préforme utilisée pour la fabrication de la bouteille représentée à la figure 1

Dans les exemples ci-dessous la concentration en monomères, notamment en monomères diacides, en diéthylèneglycol sont déterminées selon la méthode suivante :
Analyse chromatographique (CPG) après méthanolyse des polymères.
Confirmation des structures identifiées par CPG par couplage Chromatographie en phase gazeuse / spectrographie Infrarouge / Spectrographie de masse (GC/IR/MS).
Méthanolyse : Prise d'essai de 300 mg pesée environ exactement (broyée ou non), ajoutée dans une bombe de Parr en zirconium avec 10 ml de méthanol Normapur et 5 gouttes de solution méthanolique à 0,6% (p/v) de tétrabutyltitanate (TBOT) (produit ALDRICH ref. 24,411-2).

La bombe de Parr est portée pendant 16 heures à 190°C, en étuve ventilée. Après refroidissement, le contenu est transvasé quantitativement dans une fiole jaugée de 50 ml. La bombe de Parr est rincée par 3 fois avec 10 ml d'acétone, la solution de rinçage est ajoutée dans la fiole jaugée. L'étalon interne (2 ml à la pipette de précision, d'une solution 1.5 g / 50 ml pesés à 0.1 mg près de 1,4-butanediol dans l'acétone) est ajouté dans la fiole. La fiole jaugée est complétée à 50 ml avec de l'acétone. Cette solution est utilisée pour réaliser les analyses chromatographiques pour déterminer la concentration en différents monomères selon les techniques habituelles utilisées en analyse chromatographique. Les coefficients de réponse de tous les composés susceptibles d'être présents doivent être déterminés.

Pour compléter l'identification des composés analysés un couplage est effectué avec une analyse infra-rouge et une analyse en spectrographie de masse.

### Exemple 1

Un copolyester obtenu à partir d'acide téréphtalique et d'éthylène glycol contenant 2,6 % molaire d'acide isophtalique est obtenu par un procédé de polymérisation classique.

Après polymérisation en phase fondue, le polyester contient 2,4 % molaire de diéthylène glycol. le polyester est postcondensé en phase solide par chauffage sous vide à 220°C pendant une durée suffisante pour obtenir un indice de viscosité de 101,0 ml/g. Ce polyester est appelé polymère A.

### Exemple 2

Le copolyester de l'exemple 1 obtenu après polymérisation en phase fondue est soumis à une postcondensation comme dans l'exemple 1 mais pendant une durée plus longue pour obtenir un indice de viscosité de 114,1 ml/g. Le polyester est appelé polyester B.

### Exemple 3

Un polyester est obtenu à partir d'acide téréphtalique et d'éthylène glycol avec une étape d'estérification à une température de 245°C puis polycondensation en présence d'antimoine à 275°C. Le polymère obtenu a un indice de viscosité de 74 ml/g.

Le polyester obtenu est soumis à une postcondensation sous vide à 220°C pour obtenir un indice de viscosité de 89,2 ml/g. Le polyester est appelé polyester C.

### Exemple 4

Le polyester de l'exemple 3 obtenu après polymérisation en phase fondue est soumis à une postcondensation comme dans l'exemple 3 mais pendant une durée plus longue pour obtenir un indice de viscosité de 112,0 ml/g. Le polyester est appelé polyester D.

Des bouteilles conformément à la figure 1 ont été réalisées avec les quatre polyesters ci-dessus pour déterminer la résistance au fluage de ces polyesters par la mesure du VRB et le test du soufflage libre. Les résultats obtenus sont donnés dans le tableau 1 ci-dessous avec indication des indices de viscosité mesurés sur les bouteilles obtenues et les préformes correspondantes.

**TABLEAU 1**

| **Ex.** | **polyester** | **Indice de viscosité en (ml/g)** | | | **% molaire** | | **VRB (%)** | **Volume soufflage libre (millilitre)** | **densité** |
|---|---|---|---|---|---|---|---|---|---|
| | | granulé | préforme | bouteille | DEG | DEG + AIP | | | |
| 1 | A | 100,9 | 91,9 | 93,9 | 2,4 | 5,0 | 2,4 | 1428 | 1,362 |
| 2 | B | 114,1 | 103,6 | 98,3 | 2,4 | 5,0 | 2,3 | 1157 | 1,366 |
| 3 | C | 89,2 | 82,4 | 82,6 | 1,3 | 1,3 | 2,6 | 1213 | 1,363 |
| 4 | D | 112,0 | 99,9 | 100,4 | 1,3 | 1,3 | 1,7 | 734 | 1,371 |

Ces résultats montrent que seul le polyester D conforme à l'invention permet d'obtenir des bouteilles présentant une tenue thermo-mécanique élevée qui permet leur utilisation dans les procédés de pasteurisation des denrées liquides ou dans les procédés de remplissage à chaud desdites bouteilles.

A l'inverse, les polyesters A, B, C non conformes à l'invention présentent une tenue thermo-mécanique inférieure et insuffisante pour la fabrication de bouteilles compatibles avec les procédés de pasteurisation sans modifier la forme de ladite bouteille ou l'épaisseur de la paroi.

## Revendications

1. Procédé de fabrication d'un récipient creux par un procédé d'injection/soufflage d'un polyester à base d'unités récurrentes de téréphtalate d'éthylène glycol, comprenant une première étape d'injection d'une préforme et une seconde étape de soufflage de ladite préforme dans un moule de forme correspondante au récipient, le polyester comprend
• une quantité de monomères différents de l'éthylène glycol et de l'acide téréphtalique au plus égale à 3,5 % molaire par rapport au nombre total de moles de monomères diacides.
• une quantité de diéthylène glycol libre ou combiné représentant au maximum 2,5 % molaire par rapport au nombre de moles de monomères diacides
**caractérisé en ce que** le polyester présente un indice de viscosité IV ≥ 95 ml/g.

2. Procédé selon la revendication 1, **caractérisé en ce que** le polyester a un indice de viscosité supérieur à 100 ml/g.

3. Procédé selon l'une des revendications 1 ou 2, **caractérisé en ce que** la concentration en monomères différents est au plus égale à 3 % molaire.

4. Procédé selon la revendication 3, **caractérisé en ce que** la concentration en monomères différents est plus égale à 2,5 % molaire.

5. Procédé selon l'une des revendications 1 à 4, **caractérisé en ce que** la concentration en diéthylène glycol est au plus égale à 2 % molaire.

6. Procédé selon la revendication 5, **caractérisé en ce que** la concentration en diéthylène glycol est au plus égale à 1,5 % molaire.

7. Procédé selon l'une des revendications précédentes **caractérisé en ce que** le monomère différent est choisi dans le groupe comprenant l'acide isophtalique, l'acide naphtalènedicarboxylique, l'acide cyclohexane dicarboxylique, l'acide cyclohexane diacétique, l'acide succinique, l'acide glutarique, l'acide adipique, l'acide azélaïque, l'acide sébacique, le diéthylène glycol, le triéthylène glycol, les isomères du 1,4-cyclohexane diméthanol, le 1-3 propanediol, le 1,4-butanediol, le 1,5-pentanediol, le (2,4)-3 méthylpentanediol, 1-4, 2-méthylpentanediol,(1,3)2,2,4-triméthylpentanediol, (1,3),2-éthylhexanediol, (1-3)-2,2-diéthylpropanediol, 1,3hexanediol, 1,4-di(hydroxyéthoxy) benzène, 2,2-bis (4-hydroxycyclohexyl)propane, 2,4-4 dihydroxy-1,1,3,3-tétraméthylcyclobutane, 2,2-bis(3-hydroxyéthoxyphényl)propane, 2,2-bis(4-hydroxypropoxyphényl)propane.

8. Corps creux injecté-soufflé en polyester à base d'unités récurrentes de téréphtalate d'éthylène glycol et présentant une quantité de monomères différents de l'éthylène glycol et de l'acide téréphtalique au plus égale à 3,5 % molaire par rapport au nombre total de moles de monomères diacides et une quantité de diéthylène glycol libre ou combiné représente au maximum 2,5 % molaire par rapport au nombre de moles de monomères diacides obtenu par injection-soufflage de ce polyester, **caractérisé en ce que** le polyester présente un indice de viscosité IV ≥ 95 ml/g.

9. Corps creux selon la revendication 8, **caractérisé en ce que** le corps creux est une bouteille et **en ce que** la bouteille présente une résistance au nuage à chaud mesurée par la détermination du VRB selon le test de pasteurisation Tp, le VRB étant inférieur à 2%.

10. Préforme pour un procédé d'injection/soufflage en polyester à base d'unités récurrentes de téréphtalate d'éthylène glycol et présentant une quantité de monomères différents de l'éthylène glycol et de l'acide téréphtalique au plus égale à 3,5 % molaire par rapport au nombre total de moles de monomères diacides et une quantité de diéthylène glycol libre ou combiné représente au maximum 2,5 % molaire par rapport au nombre de moles de monomères diacides obtenu par injection de ce polyester, **caractérisé en ce que** le polyester présente un indice de viscosité IV ≥ 95 ml/g.

## Claims

1. Process for manufacturing a hollow container by a process of injection moulding/blow moulding a polyester based on ethylene glycol terephthalate repeat units, comprising a first step of injection moulding a preform and a second step of blow moulding said preform in a mould having a shape corresponding to the container, the polyester comprises:
• an amount of monomers different from ethylene glycol and from terephthalic acid that is at most equal to 3.5 mol% relative to the total number of moles of diacid monomers;
• an amount of free or combined diethylene glycol representing at most 2.5 mol% relative to the number of moles of diacid monomers,
**characterized in that** the polyester has a viscosity index VI ≥ 95 ml/g.

2. Process according to Claim 1, **characterized in that** the polyester has a viscosity index greater than 100 ml/g

3. Process according to either of Claims 1 and 2, **characterized in that** the concentration of different monomers is at most equal to 3 mol%.

4. Process according to Claim 3, **characterized in that** the concentration of different monomers is at most equal to 2.5 mol%.

5. Process according to one of Claims 1 to 4, **characterized in that** the concentration of diethylene glycol is at most equal to 2 mol%.

6. Process according to Claim 5, **characterized in that** the concentration of diethylene glycol is at most equal to 1.5 mol%.

7. Process according to one of the preceding claims, **characterized in that** the different monomer is chosen from the group comprising isophthalic acid, naphthalenedicarboxylic acid, cyclohexanedicarboxylic acid, cyclohexanediacetic acid, succinic acid, glutaric acid, adipic acid, azelaic acid, sebacic acid, diethylene glycol, triethylene glycol, isomers of 1,4-cyclohexanedimethanol, 1,3-propanediol, 1,4-butanediol, 1,5-peritanediol, 3-methyl-2,4-pentanediol, 2-methyl-1,4-pentanediol, 2,2,4-trimethyl-1,3-pentanediol, 2-ethyl-1,3-hexanediol, 2,2-diethyl-1,3-propanediol, 1,3-hexanediol, 1,4-di(hydroxyethoxy)-benzene, 2,2-bis(4-hydroxycyclohexyl)propane, 2,4-dihydroxy-1,1,3,3-tetramethylcyclobutane, 2,2-bis-(3-hydroxyethoxyphenyl)propane, and 2,2-bis(4-hydroxypropoxyphenyl)propane.

8. Injection-moulded/blow-moulded hollow body made of polyester based on ethylene glycol terephthalate repeat units and having an amount of monomers that are different from ethylene glycol and from terephthalic acid that is at most equal to 3.5 mol% relative to the total number of moles of diacid monomers, and an amount of free or-combined diethylene glycol that represents at most 2.5 mol% relative to the number of moles of diacid monomers obtained by injection moulding/blow moulding this polyester, **characterized in that** the polyester has a viscosity index VI ≥ 95 ml/g.

9. Hollow body according to Claim 8, **characterized in that** the hollow body is a bottle and **in that** the bottle has a hot-creep resistance measured by determination of the BVV according to the pasteurization test Tp, the BVV being less than 2%.

10. Preform for an injection moulding/blow moulding process made from polyester based on- ethylene glycol terephthalate repeat units and having an amount of monomers different from ethylene glycol and from terephthalic acid that is at most equal to 3.5 mol% relative to the total number of moles of diacid monomers and an amount of free or combined diethylene glycol that represents at most 2.5 mol% relative to the number of moles of diacid monomers obtained by injection moulding of this polyester, **characterized in that** the polyester has a viscosity index VI ≥ 95 ml/g.

## Patentansprüche

1. Verfahren zur Herstellung eines Hohlkörpers durch ein Verfahren zum Spritzen/Blasen eines Polyesters auf der Basis von wiederkehrenden Einheiten von Ethylenglycol-terephthalat, umfassend eine erste Stufe des Spritzens eines Vorformlings und eine zweite Stufe des Blasens dieses genannten Vorformlings in eine Gießform, die dem Hohlkörper entspricht, wobei der Polyester umfasst
eine Menge von unterschiedlichen Monomeren von Ethylenglycol und Terephthalsäure von höchstens gleich 3,5 Mol-%, bezogen auf die Gesamtanzahl der Mole von Disäure-Monomeren,
eine Menge von freiem oder kombiniertem Diethylenglycol, die höchstens 2,5 Mol-% ausmacht, bezogen auf die Anzahl der Mole von Disäure-Monomeren,
**dadurch gekennzeichnet, dass** der Polyester einen Viskositätsindex IV ≥ 95 ml/g aufweist.

2. Verfahren nach Anspruch 1, **dadurch gekennzeichnet, dass** der Polyester einen Viskositätsindex von über 100 ml/g aufweist.

3. Verfahren nach einem der Ansprüche 1 oder 2, **dadurch gekennzeichnet, dass** die Konzentration an unterschiedlichen Monomeren höchstens gleich 3 Mol-% beträgt.

4. Verfahren nach Anspruch 3, **dadurch gekennzeichnet, dass** die Konzentration an unterschiedlichen Monomeren höchstens gleich 2,5 Mol-% beträgt.

5. Verfahren nach einem der Ansprüche 1 bis 4, **dadurch gekennzeichnet, dass** die Konzentration an Diethylenglycol höchstens gleich 2 Mol-% beträgt.

6. Verfahren nach Anspruch 5, **dadurch gekennzeichnet, dass** die Konzentration an Diethylenglycol höchstens gleich 1,5 Mol-% beträgt.

7. Verfahren nach einem der vorstehenden Ansprüche, **dadurch gekennzeichnet, dass** das unterschiedliche Monomer aus der Gruppe gewählt wird, die Isophthalsäure, Naphthalindicarbonsäure, Cyclohexandicarbonsäure, Cyclohexandiessigsäure, Bernsteinsäure, Glutarsäure, Adipinsäure, Azelainsäure, Sebacinsäure, Diethylenglycol, Triethylenglycol, die Isomeren von 1,4-Cyclohexan-dimethanol, 1,3-Propandiol, 1,4-Butandiol, 1,5-Pentandiol, (2,4)-3-Methylpentandiol, 1-4,2-Methylpentandiol, (1,3)-2,2,4-Trimethylpentandiol, (1,3)-2-Ethylhexandiol, (1,3)-2,2-Diethylpropandiol, 1,3-Hexandiol, 1,4-Di-(hydroxyethoxy)-benzol, 2,2-Bis-(4-hydroxycyclohexyl)-propan, 2,4- Dihydroxy-1,1,3,3-tetramethylcyclobutan, 2,2-Bis-(3-hydroxyethoxyphenyl)-propan, 2,2-Bis-(4-hydroxypropoxyphenyl)-propan umfasst.

8. Gespritzt-geblasener Hohlkörper aus Polyester auf der Basis von wiederkehrenden Einheiten von Ethylenglycol-terephthalat mit einer Menge von unterschiedlichen Monomeren von Ethylenglycol und Terephthalsäure von höchstens gleich 3,5 Mol-%, bezogen auf die Gesamtanzahl der Mole von Disäure-Monomeren, und einer Menge von freiem oder kombiniertem Diethylenglycol, die höchstens 2,5 Mol-% ausmacht, bezogen auf die Anzahl der Mole von Disäure-Monomeren, erhalten durch Spritzen/Blasen dieses Polyesters, **dadurch gekennzeichnet, dass** der Polyester einen Viskositätsindex IV ≥ 95 ml/g aufweist .

9. Hohlkörper nach Anspruch 8, **dadurch gekennzeichnet, dass** der Hohlkörper eine Flasche ist und dass die Flasche eine Widerstandsfähigkeit gegenüber dem Fließen in der Wärme aufweist, gemessen durch die Bestimmung des VRB gemäß dem Test der Pasteurisation Tp, wobei der VRB unter 2 % liegt.

10. Vorformling für ein Verfahren zum Spritzen/Blasen aus Polyester auf der Basis von wiederkehrenden Einheiten von Ethylenglycol-terephthalat mit einer Menge von unterschiedlichen Monomeren von Ethylenglycol und Terephthalsäure von höchstens gleich 3,5 Mol-%, bezogen auf die Gesamtanzahl der Mole von Disäure-Monomeren, und einer Menge von freiem oder kombiniertem Diethylenglycol, die höchstens 2,5 Mol-% ausmacht, bezogen auf die Anzahl der Mole von Disäure-Monomeren, erhalten durch Spritzen dieses Polyesters, **dadurch gekennzeichnet, dass** der Polyester einen Viskositätsindex IV ≥ 95 ml/g aufweist.
